# EUROPÄISCHE PATENTANMELDUNG

(11) **EP 0 985 583 A2**
(43) Veröffentlichungstag der Anmeldung: **15.03.2000**
(21) Anmeldenummer: 99116788.3
(22) Anmeldetag: 31.08.1999
(51) Int. Cl.: B60R 9/10, B60R 5/00

(54) **Einrichtung zum Transport eines Fahrrades mit einem Fahrzeug**

(30) Priorität: 10.09.1998 DE 29816248 U
(71) Anmelder: Johnson Controls GmbH, 51399 Burscheid (DE)
(72) Erfinder: Karacsonyi, Tamas, 42389 Wuppertal (DE)
(74) Vertreter: Patentanwälte Dr. Solf & Zapf

(57) **Zusammenfassung**

Die Erfindung betrifft eine Einrichtung zum Transport mindestens eines Fahrrades (1) mit einem Fahrzeug. Um ein Fahrrad ohne Beeinträchtigungen der Fahreigenschaften des Fahrzeuges transportieren zu können und es besser vor Diebstahl zu schützen, ist ein ortfest innerhalb des Fahrzeuges befestigbares Halteteil (2) mit Halte - und Fixiermitteln für das Fahrrad (1) vorgesehen.

## Beschreibung

Die vorliegende Erfindung betrifft eine Einrichtung zum Transport mindestens eines Fahrrades mit einem Fahrzeug.

Zum Transport von Fahrrädern mit einem Kraftfahrzeug sind verschiedenartige Trägersysteme bekannt, mit denen jeweils mindestens ein Fahrrad im Außenbereich, insbesondere auf dem Dach oder im Heckbereich, gehaltert und so transportiert werden kann. Bei herkömmlichen Fahrrad-Dachträgern stehen die Fahrräder üblicherweise vertikal nach oben relativ weit vom Fahrzeug ab. Dies bringt den Nachteil mit sich, daß besonders bei hohen Fahrgeschwindigkeiten ein hoher Luftwiderstand mit entsprechenden Windgeräuschen entsteht. Oftmals kommt es auch zu Instabilitäten, vor allem durch Seitenwind. Zudem würde eine - nie ganz auszuschließende - unsachgemäße Befestigung des Fahrrades zu einer erhöhten Unfallgefahr führen. Schließlich sind die Fahrräder auch nicht diebstahlsicher.

Der vorliegenden Erfindung liegt deshalb die Aufgabe zugrunde, eine Einrichtung zu schaffen, mit der ein Fahrrad ohne Beeinträchtigungen der Fahreigenschaften des Fahrzeugs transportiert und besser vor Diebstahl geschützt werden kann.

Erfindungsgemäß wird dies erreicht durch ein ortsfest innerhalb des Fahrzeuges befestigbares Halteteil mit Halte- und Fixiermitteln für das Fahrrad. Dabei ist das Fahrrad insbesondere in einer aufrecht stehenden Position fixierbar, wozu vorzugsweise zunächst das Vorderrad demontiert und separat fixiert wird.

Das erfindungsgemäße Halteteil ist so konzipiert, daß es lösbar an fahrzeugseitigen Halterungen befestigbar ist, wobei diese fahrzeugseitigen Halterungen insbesondere auch alternativ zum Befestigen einer Sitzkonstruktion geeignet sind. Umgekehrt ausgedrückt bedeutet dies, daß nach Demontage und Entnahme der Sitzkonstruktion an denselben fahrzeugseitigen Halterungen das erfindungsgemäße Halteteil befestigt werden kann. Hierzu sind die Halterungen beispielsweise von Schraubpunkten (Gewindelöchern) gebildet, an denen das Halteteil durch Verschrauben befestigbar ist. Es kann sich alternativ aber mit Vorteil auch um Schnellverschluß-Halterungen handeln, wie sie zur werkzeuglosen (schraubenlosen), lösbaren Sitzhalterung z.B. in VANs Verwendung finden.

Bei dem Halteteil handelt es sich dazu zweckmäßigerweiser um ein relativ flaches, muldenartiges Teil mit einer etwa einem Sitzteil entsprechenden Grundform (insbesondere im wesentlichen rechteckig oder quadratisch mit abgerundeten Ecken). Dabei weist das Halteteil zweckmäßigerweise eine muldenartige Radaufnahme zum teilweisen Einsetzen eines demontierten Vorderrades des Fahrrades auf. Das Vorderrad ist dann separat in einem vom übrigen Fahrrad getrennten Zustand in die Radaufnahme einsetzbar und durch Fixiermittel, insbesondere mindestens einen Haltegurt, fixierbar. Das Halteteil weist weiterhin zur Halterung des restlichen Fahrrades (Rahmen plus Hinterrad) einerseits ein Halteelement für eine Vorderradgabel sowie andererseits einen Befestigungsarm für den Fahrradrahmen auf. Auf diese Weise läßt sich das Fahrrad relativ platzsparend innerhalb des Fahrzeugs unterbringen. Dennoch ist die erfindungsgemäße Transporteinrichtung vor allem für größere Fahrzeuge, wie Großraumlimousinen, Kleinbusse oder Vans, gedacht.

Selbstverständlich können auch mehrere erfindungsgemäße Halteteile innerhalb des Fahrzeugs montiert werden, wozu eine entsprechende Anzahl von Sitzkonstruktionen demontiert wird.

Weitere vorteilhafte Ausgestaltungsmerkmale der Erfindung sind in den Unteransprüchen sowie der folgenden Beschreibung enthalten.

Anhand eines in der Zeichnung veranschaulichten, bevorzugten Ausführungsbeispiels soll die Erfindung näher erläutert werden. Dabei zeigen:
- Fig. 1: eine stark schematische Perspektivansicht des Bereichs einer Fahrzeug-Sitzgruppe mit Darstellung des Austauschs einer Sitzkonstruktion gegen ein erfindungsgemäßes Fahrrad-Halteteil,
- Fig. 2: eine Perspektivansicht des erfindungsgemäßen Halteteils zur Erläuterung des Vorgangs zum Befestigen des Fahrradrahmens und
- Fig. 3: eine weitere Perspektivansicht zur Erläuterung des Einsetzens eines Fahrrad-Vorderrades.

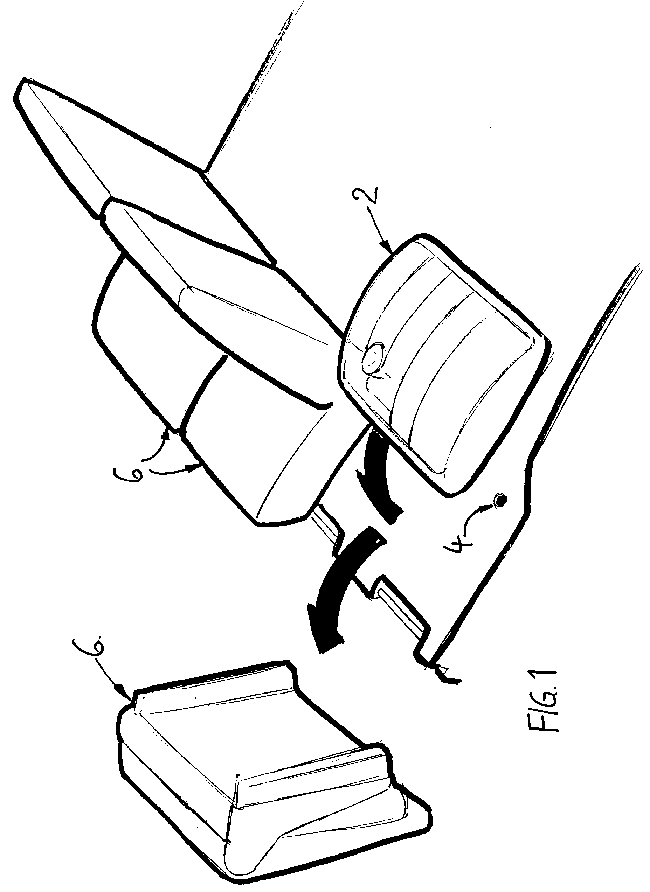

Eine erfindungsgemäße Einrichtung zum Transport eines Fahrrades 1 besteht aus einem ortsfest innerhalb eines Fahrzeugs befestigbaren Halteteil 2, wobei dieses Halteteil 2 Halte- und Fixiermittel für das Fahrrad 1 aufweist. Gemäß Fig. 1 ist das Halteteil 2 lösbar an fahrzeugseitigen Halterungen 4 befestigbar, wobei diese Halterungen 4 vorzugsweise auch alternativ zum Befestigen einer Sitzkonstruktion 6 geeignet sind. Auf diese Weise kann im Bedarfsfall die jeweilige Sitzkonstruktion 6 demontiert und aus dem Fahrzeug entnommen werden, so daß nachfolgend das erfindungsgemäße Halteteil 2 an dieser Stelle montiert werden kann. Die Halterungen 4 sind im dargestellten Beispiel von Schraubpunkten (Gewindelöchern) gebildet, an denen das Halteteil 2 durch Verschrauben befestigbar ist. Alternativ können aber auch beliebige Schnellverschluß-Halterungen vorgesehen sein (nicht dargestellt), wie sie üblicherweise zur lösbaren bzw. demontierbaren Sitzhalterung in Fahrzeugen Verwendet werden. Dabei sind dann an dem Halteteil 2 solche Halterungselemente vorgesehen, wie sie sonst auch an dem jeweiligen Sitz angeordnet sind. Beispielsweise kann es sich um Hakenelemente handeln, die mit fahrzeugseitigen, z.B. von Querstangen oder Bügeln gebildeten Halteelementen zusammenwirken.

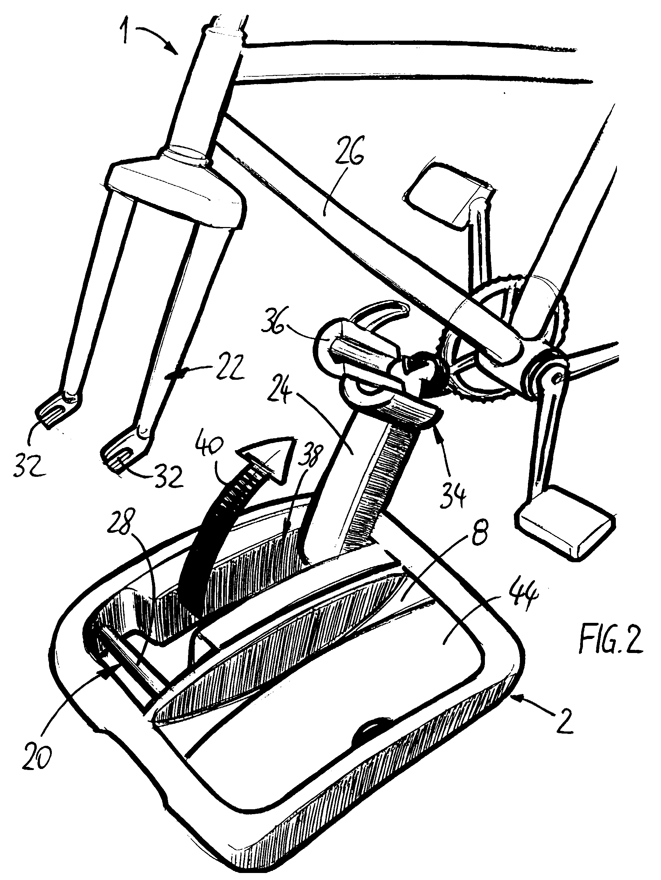

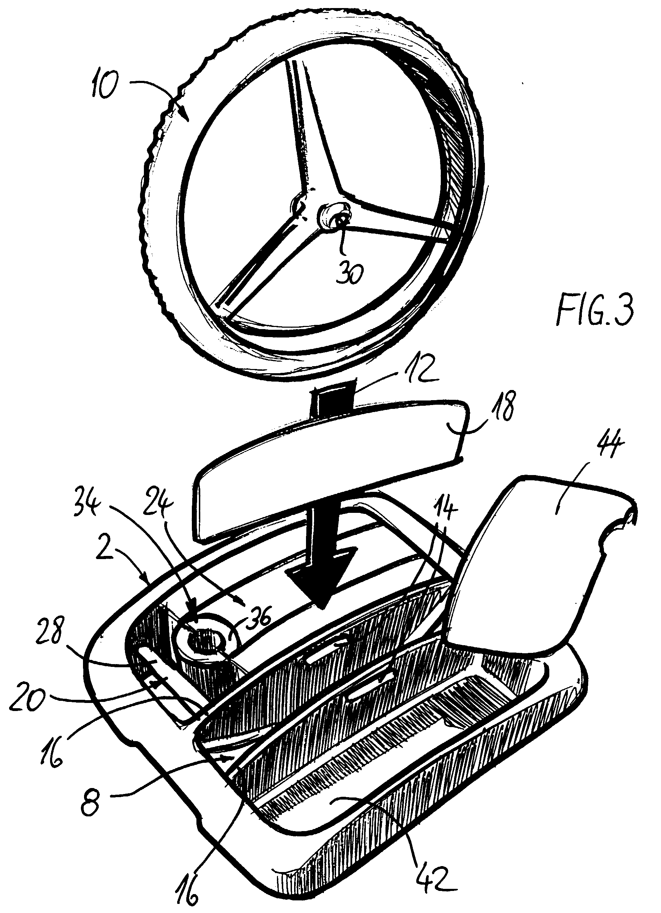

Wie sich vor allem aus Fig. 2 und 3 jeweils ergibt, handelt es sich bei dem Halteteil 2 um ein relativ flaches, muldenartiges Aufnahmeteil. Das Halteteil 2 weist zunächst eine relativ schmale, an die Reifenbreite angepaßte, muldenartige Radaufnahme 8 zum teilweisen Einsetzen eines demontierten Vorderrades 10 des Fahrrades auf (s. hierzu Fig.3). Das Vorderrad 10 ist insbesondere in vertikaler Anordnung sowie in vertikaler Richtung (Pfeil 12) in die Radaufnahme 8 einstellbar und in diesem Zustand durch Fixiermittel, insbesondere mindestens einen nicht dargestellten Haltegurt, fixierbar. Der Haltegurt kann durch schlitzartige Öffnungen 14 in die Radaufnahme 8 begrenzenden Seitenwandungen 16 gezogen werden. Zusätzlich kann mindestens ein Trennwandelement 18 vorgesehen sein, das zur Anpassung an unterschiedliche Vorderrad- bzw. Reifenbreiten in unterschiedlichen Positionen in die Radaufnahme 8 lösbar einsetzbar ist.

Das Halteteil 2 weist ferner ein Halteelement 20 für eine Vorderradgabel 22 (Fig. 2) sowie einen Befestigungsarm 24 für den Fahrradrahmen 26 auf. Zweckmäßigerweise ist das Haltelement 20 durch eine Querstange 28 derart gebildet, daß die Vorderradgabel 22 mit für eine Radachse 30 (vgl. Fig. 3) vorgesehenen Schlitzöffnungen 32 auf die Querstange 28 aufsetzbar ist. Der Befestigungsarm 24 weist an seinem freien Ende eine Rahmenhalterung 34 derart auf, daß im gehalterten Zustand der Vorderradgabel 22 ein Rahmenrohr insbesondere in seinem einer Tretkurbel benachbarten Bereich in der Rahmenhalterung 34 befestigbar ist. Vorteilhafterweise wird die Rahmenhalterung 34 von einer Schnellspann-Rohrklemme 36 gebildet, die vorzugsweise innenseitig zum Schutz des Rahmens gepolstert ist. Die Ausrichtung der Rohrklemme 36 entspricht dem Verlauf des zu halternden Rahmenrohrs.

In weiterer vorteilhafter Ausgestaltung der Erfindung ist der Befestigungsarm 24 derart schwenkbeweglich mit dem Halteteil 2 verbunden, daß er wahlweise entweder in eine im wesentlichen versenkt in einer Aufnahmevertiefung 38 des Halteteils 2 liegende Nichtgebrauchsstellung (s. Fig. 3) oder gemäß Fig. 2 in Pfeilrichtung 40 in eine aus der Aufnahmevertiefung herausragende Gebrauchsstellung bringbar ist. In der Nichtgebrauchsstellung nach Fig. 3 liegt dann die Rohrhalterung 34 benachbart in der Nähe der Querstange 28.

Der Bereich des Befestigungsarms 24 und/oder der Radaufnahme 8 kann mit Vorteil durch mindestens ein nicht dargestelltes Deckelelement abdeckbar sein.

Zudem weist das Halteteil 2 zweckmäßigerweise mindestens ein weiteres Aufnahmefach 42 beispielsweise zum Unterbringen von beliebigen Kleinteilen auf. Dieses zusätzliche Aufnahmefach 42 ist bevorzugt durch ein Deckelelement 44 abdeckbar.

In der dargestellten, bevorzugten Ausführungsform ist die Radaufnahme 8 etwa in der Mitte des Halteteils 2 angeordnet, und beidseitig neben der Radaufnahme 8 liegen einerseits die Aufnahmevertiefung 38 für den Befestigungsarm 24 und andererseits das zusätzliche Aufnahmefach 42.

Die Erfindung ist nicht auf die dargestellten und beschriebenen Äusführungsbeispiele beschränkt, sondern umfaßt auch alle im Sinne der Erfindung gleichwirkenden Ausführungen. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, daß grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Einrichtung zum Transport mindestens eines Fahrrades (1) mit einem Fahrzeug,
**gekennzeichnet durch** ein ortsfest innerhalb des Fahrzeuges befestigbares Halteteil (2) mit Halte- und Fixiermitteln für das Fahrrad (1).

2. Einrichtung nach Anspruch 1,
**dadurch gekennzeichnet,** daß das Halteteil (2) lösbar an fahrzeugseitigen Halterungen (4) befestigbar ist, wobei diese Halterungen (4) vorzugsweise auch alternativ zum Befestigen einer Sitzkonstruktion (6) geeignet sind.

3. Einrichtung nach Anspruch 2,
**dadurch gekennzeichnet,** daß die Halterungen (4) von Schraubpunkten gebildet sind, an denen das Halteteil (2) durch Verschrauben befestigbar ist.

4. Einrichtung nach Anspruch 2,
**dadurch gekennzeichnet,** daß die Halterungen Bestandteile einer Fahrzeugsitz-Schnellverschluß-Halterung sind.

5. Einrichtung nach einem der Ansprüche 1 bis 4,
**dadurch gekennzeichnet,** daß das Halteteil (2) eine muldenartige Radaufnahme (8) zum teilweisen Einsetzen eines demontierten Vorderrades (10) des Fahrrades (1) aufweist, wobei das Vorderrad (10) in seinem in der Radaufnahme (8) sitzenden Zustand durch Fixiermittel, insbesondere mindestens einen Haltegurt, fixierbar ist.

6. Einrichtung nach Anspruch 5,
**gekennzeichnet durch** mindestens ein Trennwandelement (18), das zur Anpassung an unterschiedliche Vorderrad-Breiten in unterschiedlichen Positionen in die muldenartige Radaufnahme (8) lösbar einsetzbar ist.

7. Einrichtung nach einem der Ansprüche 1 bis 6,
**dadurch gekennzeichnet,** daß das Halteteil (2) ein Halteelement (20) für eine Vorderradgabel (22) sowie einen Befestigungsarm (24) für einen Fahrradrahmen (26) aufweist.

8. Einrichtung nach Anspruch 7,
**dadurch gekennzeichnet,** daß das Halteelement (20) durch eine Querstange (28) derart gebildet ist, daß die Vorderradgabel (22) mit für eine Radachse (30) vorgesehenen Schlitzöffnungen (32) auf die Querstange (28) aufsetzbar ist.

9. Einrichtung nach Anspruch 7 oder 8,
**dadurch gekennzeichnet,** daß der Befestigungsarm (24) eine Rahmenhalterung (34) derart aufweist, daß im gehalterten Zustand der Vorderradgabel (22) ein Rahmenrohr - insbesondere im einer Tretkurbel benachbarten Bereich - durch die Rahmenhalterung (34) befestigbar ist.

10. Einrichtung nach Anspruch 9,
**dadurch gekennzeichnet,** daß die Rahmenhalterung (34) von einer - vorzugsweise innenseitig gepolsterten - Schnellspann-Rohrklemme (36) gebildet ist.

11. Einrichtung nach einem der Ansprüche 7 bis 10,
**dadurch gekennzeichnet,** daß der Befestigungsarm (24) derart schwenkbeweglich mit dem Halteteil (2) verbunden ist, daß er wahlweise entweder in eine im wesentlichen versenkt in einer Aufnahmevertiefung (38) des Halteteils (2) liegende Nichtgebrauchsstellung oder in eine aus der Aufnahmevertiefung (38) herausragende Gebrauchsstellung bringbar ist.

12. Einrichtung nach einem der Ansprüche 1 bis 11,
**dadurch gekennzeichnet,** daß das Halteteil (2) mindestens ein weiteres, insbesondere durch ein Deckelelement (44) abdeckbares Aufnahmefach (42) z.B. zum Unterbringen von Kleinteilen aufweist.

13. Einrichtung nach einem der Ansprüche 5 bis 12,
**dadurch gekennzeichnet,** daß der Bereich des Befestigungsarms (24) und/oder der Radaufnahme (8) durch mindestens ein Deckelelement abdeckbar ist.
